# EUROPEAN PATENT APPLICATION

(11) **EP 4 715 509 A1**
(43) Date of publication of application: **25.03.2026**
(21) Application number: 24806640.9
(22) Date of filing: 16.05.2024
(51) Int. Cl.: G05D 1/43

(54) **CONTROL METHOD FOR AUTONOMOUS WORKING MACHINE, STORAGE MEDIUM, AND AUTONOMOUS WORKING MACHINE**

(30) Priority: 16.05.2023 CN 202310547379; 27.05.2023 CN 202310609807; 07.07.2023 CN 202310833359
(71) Applicant: Positec Technology (China) Co., Ltd., Industrial Park Suzhou Jiangsu 215123 (CN)
(72) Inventor: YU, Hang, Suzhou, Jiangsu 215123 (CN); GAO, Don Zhendong, Suzhou, Jiangsu 215123 (CN); YUAN, Sisi, Suzhou, Jiangsu 215123 (CN); HOU, Mingshuo, Suzhou, Jiangsu 215123 (CN); WANG, Yuanyuan, Suzhou, Jiangsu 215123 (CN); ZHENG, Siyuan, Suzhou, Jiangsu 215123 (CN)
(74) Representative: Kilburn & Strode LLP
(86) International application number: PCT/CN2024/093653
(87) International publication number: WO 2024/235290

(57) **Abstract**

The present application relates to a control method for an autonomous working machine, a storage medium, and an autonomous working machine. The control method for the autonomous working machine comprises: in response to an operating mode of the autonomous working machine being a boundary-following working mode and the autonomous working machine detecting a first boundary and a second boundary of a working area, controlling the autonomous working machine to move based on a first direction to move along the first boundary, wherein the first boundary and the second boundary are connected and form an included angle; determining a first distance between the second boundary and the autonomous working machine; in a case that the first distance is less than a first threshold, adjusting a pose of the autonomous working machine to increase a second distance, wherein the second distance is a distance between a rear portion of the autonomous working machine and the first boundary; controlling the autonomous working machine to move along the second boundary. The present application can ensure improved working coverage while avoiding damage to the autonomous working machine.

## Description

### TECHNICAL FIELD

The present disclosure relates to a control method for an autonomous working machine, a storage medium, and an autonomous working machine.

### BACKGROUND

With the gradual popularization of intelligent devices in daily life, autonomous working machines (such as automatic lawn mowers for garden maintenance and sweeping robots for household floor cleaning) have also been welcomed by users.

Autonomous working machines typically moved and/or worked within a working area (such as a user's lawn at home), and could also move and/or work along boundaries of the working area. Taking an automatic lawn mower as an example, it could travel on a user's lawn at home and execute cutting operations to achieve automatic cutting of the lawn, which could greatly save manpower. When an autonomous working machine moved or worked, it was necessary to ensure its safety and avoid damage.

### SUMMARY

To overcome the defects of the prior art, the problem to be solved by embodiments of the present disclosure is to avoid damage to the autonomous working machine while ensuring improved working coverage.

In some embodiments, a control method for an autonomous working machine is provided, the control method comprising:
in response to an operating mode of the autonomous working machine being a boundary-following working mode and the autonomous working machine detecting a first boundary and a second boundary of a working area, controlling the autonomous working machine to move based on a first direction to move along the first boundary, wherein the first boundary and the second boundary are connected and form an included angle;
determining a first distance between the second boundary and the autonomous working machine;
in a case that the first distance is less than a first threshold, adjusting a pose of the autonomous working machine to increase a second distance, wherein the second distance is a distance between a rear portion of the autonomous working machine and the first boundary;
controlling the autonomous working machine to move along the second boundary.

In some embodiments, determining the first distance between the second boundary and the autonomous working machine comprises:
acquiring a first image of the working area captured by a camera of the autonomous working machine;
determining the first distance according to the first image, or generating a local map according to the first image and determining the first distance according to the local map.

In some embodiments, determining the first distance between the second boundary and the autonomous working machine comprises:
acquiring a satellite positioning signal based on a satellite positioning module of the autonomous working machine, and/or acquiring a non-contact obstacle detection signal based on a non-contact obstacle detection module of the autonomous working machine;
determining the first distance according to the satellite positioning signal and/or the non-contact obstacle detection signal.

In some embodiments, adjusting the pose of the autonomous working machine to increase the second distance comprises:
controlling the autonomous working machine to perform backward movement based on a second direction to a first pose, wherein when the autonomous working machine is at the first pose, the second distance is greater than a second threshold, the second direction has an included angle with a reverse direction of the first direction, and the second direction is a direction away from the first boundary.

In some embodiments, a backward trajectory based on the second direction is arc-shaped.

In some embodiments, after adjusting the pose of the autonomous working machine to increase the second distance and before controlling the autonomous working machine to move along the second boundary, the method further comprises:
controlling the autonomous working machine to move to a second pose, wherein when the autonomous working machine is at the second pose, a front portion of the autonomous working machine is oriented toward the second boundary, or when the autonomous working machine is at the second pose, a pose of the autonomous working machine is the same as a pose of the autonomous working machine before performing backward movement based on the second direction.

In some embodiments, controlling the autonomous working machine to move to the second pose comprises:
controlling the autonomous working machine to perform in-place rotation based on a third direction, wherein the third direction is a direction away from the first boundary.

In some embodiments, controlling the autonomous working machine to move to the second pose comprises:
controlling the autonomous working machine to perform backward movement based on a fourth direction to the second pose, wherein the fourth direction has an included angle with a reverse direction of the first direction, and the fourth direction is a direction to approach the first boundary.

In some embodiments, when the autonomous working machine is at the second pose, a distance between the autonomous working machine and the first boundary is less than the second distance.

In some embodiments, controlling the autonomous working machine to move along the second boundary comprises:
acquiring a second image captured by a camera of the autonomous working machine;
determining a boundary-following movement path corresponding to the second boundary according to the second image;
based on the boundary-following movement path, controlling the autonomous working machine to turn in a direction away from the first boundary and move along the second boundary.

In some embodiments, determining the boundary-following movement path corresponding to the second boundary according to the second image comprises:
determining a local map according to the second image;
determining the boundary-following movement path corresponding to the second boundary according to the local map.

In some embodiments, the control method further comprises:
when a distance that the autonomous working machine moves along the second boundary is greater than a third threshold, controlling the autonomous working machine to move backward;
when a distance between the autonomous working machine and the first boundary is less than a fourth threshold, controlling the autonomous working machine to move forward along the second boundary.

In some embodiments, the boundary-following working mode is an inner boundary working mode or a cross-boundary working mode; in the inner boundary working mode, the autonomous working machine performs boundary-following movement within the working area and executes vegetation maintenance; in the cross-boundary working mode, the autonomous working machine performs boundary-following movement with at least a part of structure located outside the working area and executes vegetation maintenance.

In some embodiments, the control method further comprises: in response to the operating mode being a boundary-following movement mode and the autonomous working machine detecting the first boundary and the second boundary, controlling the autonomous working machine to move along the first boundary until a distance between the autonomous working machine and the second boundary is less than a fifth threshold, wherein the fifth threshold is greater than the first threshold, and the boundary-following movement mode is that the autonomous working machine performs boundary-following movement within the working area;
controlling the autonomous working machine to turn in a direction away from the first boundary and move along the second boundary.

In some embodiments, after adjusting the pose of the autonomous working machine to increase the second distance and before controlling the autonomous working machine to move along the second boundary, the control method further comprises:
controlling the autonomous working machine to perform in-place rotation based on a third direction, wherein the third direction is a direction away from the first boundary;
controlling the autonomous working machine to move toward the second boundary;
when a distance between the autonomous working machine and the second boundary is less than a sixth threshold, controlling the autonomous working machine to move backward;
when a distance between the autonomous working machine and the second boundary is greater than a seventh threshold, controlling the autonomous working machine to turn in a direction away from the first boundary and move along the second boundary.

In some embodiments, a computer-readable storage medium is provided, wherein the storage medium stores a computer program, and the computer program is configured to execute the above-mentioned control method for the autonomous working machine.

In some embodiments, an autonomous working machine is provided, comprising:
a processor;
a memory configured to store executable instructions of the processor;
wherein the processor is configured to execute the above-mentioned control method for the autonomous working machine.

### BRIEF DESCRIPTION OF DRAWINGS

The objects, technical solutions and beneficial effects of the present invention described above can be clearly obtained through the detailed description of specific embodiments that can implement the present invention below, combined with the description of the accompanying drawings.

The same reference numerals and symbols in the drawings and specification are used to represent the same or equivalent elements.
Figure 1 is a structural schematic diagram of an autonomous working machine provided by some embodiments of the present application;
Figure 2 is a module schematic diagram of an autonomous working machine provided by some embodiments of the present application;
Figure 3 is a trajectory schematic diagram when an autonomous working machine directly turns at an inner corner;
Figure 4 is a schematic diagram when an autonomous working machine recognizes an inner corner provided by some embodiments of the present application;
Figure 5 is a schematic diagram of a state when an autonomous working machine moves along a first boundary until a first distance is less than a first threshold provided by some embodiments of the present application;
Figure 6 is a schematic diagram of a first pose of an autonomous working machine provided by some embodiments of the present application;
Figure 7 is a schematic diagram of a second pose of an autonomous working machine provided by some embodiments of the present application;
Figure 8 is a schematic diagram of a trajectory and another second pose of an autonomous working machine provided by some embodiments of the present application;
Figure 9 is another trajectory schematic diagram of an autonomous working machine provided by some embodiments of the present application;
Figure 10 is a schematic diagram when an autonomous working machine recognizes an outer corner provided by some embodiments of the present application;
Figure 11 is a connection schematic diagram of a memory and a processor in an autonomous working machine provided by some embodiments of the present application;
Figure 12 is a flowchart schematic diagram of a control method for an autonomous working machine provided by some embodiments of the present application;
Figure 13 is a flowchart schematic diagram of determining a first distance in a control method for an autonomous working machine provided by some embodiments of the present application;
Figure 14 is another flowchart schematic diagram of determining a first distance in a control method for an autonomous working machine provided by some embodiments of the present application.

### DETAILED DESCRIPTION

To facilitate understanding of the present invention, the present invention will be described more comprehensively below with reference to the related drawings. Preferred embodiments of the present invention are shown in the drawings. However, the present invention can be implemented in many different forms and is not limited to the embodiments described herein. On the contrary, these embodiments are provided for the purpose of making the disclosure of the present invention more thorough and comprehensive. The embodiments provided in this specification can be combined with each other.

In the present invention, unless otherwise clearly specified and limited, terms such as "install", "connect", "connection", and "fix" should be understood in a broad sense. For example, they can be fixed connections or detachable connections, or integral; they can be mechanical connections or electrical connections; they can be directly connected or indirectly connected through intermediate media, and can be internal communication between two elements or interaction relationships between two elements, unless otherwise clearly limited. For those of ordinary skill in the art, the specific meanings of the above terms in the present invention can be understood according to specific situations.

The terms "first" and "second" are used for descriptive purposes only and should not be understood as indicating or implying relative importance or implicitly indicating the number of indicated technical features. Thus, features defined with "first" and "second" may explicitly or implicitly include at least one of such features. In the description of the present invention, "multiple" means at least two, such as two, three, etc., unless otherwise clearly and specifically limited.

Unless otherwise defined, all technical and scientific terms used herein have the same meaning as commonly understood by those skilled in the technical field to which the present invention belongs. The terms used herein in the specification of the present invention are only for the purpose of describing specific embodiments and are not intended to limit the present invention. The term "and/or" used herein includes any and all combinations of one or more of the related listed items.

Embodiments provide a control method for an autonomous working machine, a storage medium, and an autonomous working machine. The autonomous working machine may be an intelligent device capable of automatic movement such as an automatic lawn mower, an automatic vacuum cleaner, an automatic mopping machine, or an automatic snow blower, which can automatically move and execute corresponding work within a specified working area, and can also return to a docking station along boundaries corresponding to the working area for docking or charging.

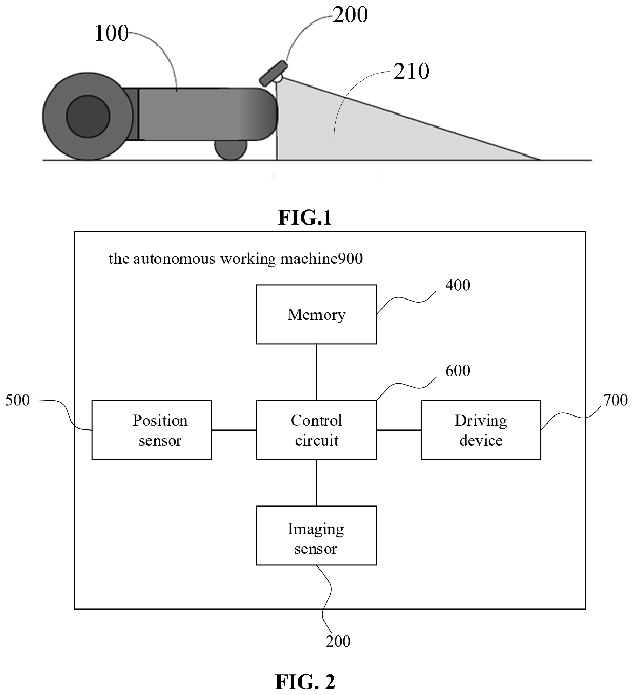

This embodiment provides an autonomous working machine. As shown in Figures 1 and 2, the autonomous working machine 900 includes a body 100, an imaging sensor 200, a position sensor 500, and a control circuit 600.

Specifically, the body 100 includes a drive device 700, and the drive device 700 is configured to drive the body 100 to move on a working surface according to received drive instructions, which typically includes wheels and motors that drive the wheels to rotate. The wheels may include driving wheels and driven wheels. The wheels may be distributed on both sides of the body 100, and the number of wheels on each side may be one or two, etc.

The body 100 further includes a working module, and the working module is configured to execute specific working tasks. For example, when the autonomous working machine 900 is an automatic lawn mower, the working module includes cutting blades, cutting motors, etc., and may also include auxiliary components such as cutting height adjustment mechanisms that optimize or adjust the mowing effect; for example, when the autonomous working machine 900 is an automatic vacuum cleaner, the working module includes working components such as a vacuum motor, a vacuum port, a vacuum tube, a vacuum chamber, and a dust collection device configured to execute vacuuming tasks.

The body 100 may further include an energy module, and the energy module is configured to provide energy for various work of the autonomous working machine 900, which may include a rechargeable battery and a charging connection structure, wherein the charging connection structure is typically a charging electrode plate, and the charging electrode plate may be used in conjunction with a charging electrode plate disposed at a docking station to charge the autonomous working machine 900.

The body 100 further includes a memory 400, and the memory 400 is configured to store data generated by sensors or control circuits, or to pre-store data for use by the control circuits.

The body 100 further includes a position sensor 500, and the position sensor 500 may include an inertial sensor IMU or an odometer ODO installed on the drive device 700, etc., configured to acquire relative positions according to movement conditions of the body 100.

In addition to the above modules, the body 100 may further include a housing for accommodating and installing various modules, a control panel for user operation, etc., and may also include various environmental sensors, such as humidity sensors, temperature sensors, acceleration sensors, light sensors, etc. The above sensors may assist the autonomous working machine 900 to judge the working environment to execute corresponding programs.

The control circuit 600 is a core component of the autonomous working machine 900, configured to control the autonomous working machine 900 to automatically move and work, and functions executed by the control circuit 600 include controlling the working module to start working or stop, controlling the drive device 700 to move, judging the power of the energy module and timely controlling the autonomous working machine 900 to return to the docking station for automatic docking and charging, combining data from environmental sensors to execute corresponding programs, etc.

Referring to Figures 1 and 2, the autonomous working machine 900 includes an imaging sensor 200, and the imaging sensor 200 is connected to the body 100 and configured to capture images in a forward direction of the body 100, wherein the images are at least partially images of a working surface in the forward direction. The captured images are located within a field of view 210 of the imaging sensor 200. The imaging sensor 200 may be a commonly used camera or lidar in the industry.

Generally, the imaging sensor 200 is installed at an upper position of the front portion of the body 100, preferably centered, with a viewing angle oriented toward the front and downward to capture images of the working surface. The size of its field of view 210 may be adjusted according to actual requirements. The larger the field of view 210, the more images captured in the forward direction of the body 100, and vice versa. The forward direction of the body 100 may have multiple types, such as normal forward movement, backward movement, turning, etc. In this embodiment, the forward direction of the body 100 refers to the direction of normal forward movement, i.e., the direction of the central axis of the body 100.

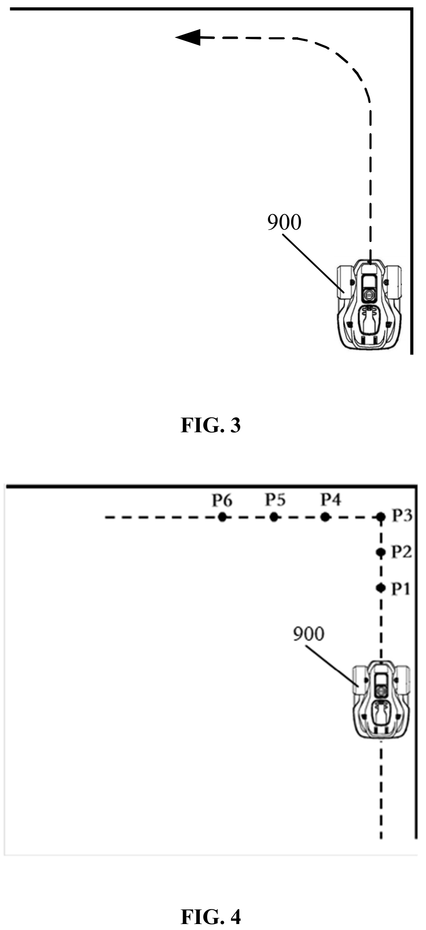

As shown in Figure 3, in some embodiments, the working area L includes at least one sub-area, and the autonomous working machine 900 is configured to move or work inside and at boundaries of the working area L. When the autonomous working area L works inside the working area L, it may move inside the working area L and perform surface processing or vegetation maintenance. When the autonomous working area L works at boundaries, it may move along boundaries of the working area L and perform surface processing or vegetation maintenance. When the autonomous working machine 900 searches for a charging station or searches for other subareas from a current sub-area, the autonomous working area L moves inside the working area L or at boundaries of the working area L, and does not perform surface processing or vegetation maintenance while moving.

The working area L has various shapes, but since the working area L is a closed area, it necessarily forms inner corners, and two boundaries forming an inner corner may be respectively referred to as a first boundary n1 and a second boundary n2.

Illustratively, the angle value of the corner is not limited, i.e., the first boundary n1 and the second boundary n2 may form an acute angle, an obtuse angle, or a right angle.

Illustratively, an included angle value between the first boundary n1 and the second boundary n2 is less than 125°.

As shown in Figure 3, the first boundary n1 and the second boundary n2 are connected, with an included angle between them, thereby forming an inner corner. If the autonomous working machine 900 directly turns at the corner, it cannot process or maintain the surface at the corner, resulting in reduced working coverage.

As shown in Figure 3, taking a lawn mower as an example, when the autonomous working machine 900 encounters an inner corner, it needs to turn, but due to limited space at the inner corner, it is easy to go out of bounds during turning, and there may even be walls, fences, etc. at the inner corner, causing collisions during turning. However, if the autonomous working machine 900 turns early when at a far distance from the corner, although it may avoid going out of bounds and collisions, early turning will cause grass at the inner corner to be unable to be cut, resulting in missed cutting and reducing cutting coverage.

To ensure improved working coverage while avoiding damage to the autonomous working machine 900, this embodiment provides a control method for the autonomous working machine 900, wherein boundaries include a first boundary n1 and a second boundary n2, and an included angle is provided between the first boundary n1 and the second boundary n2.

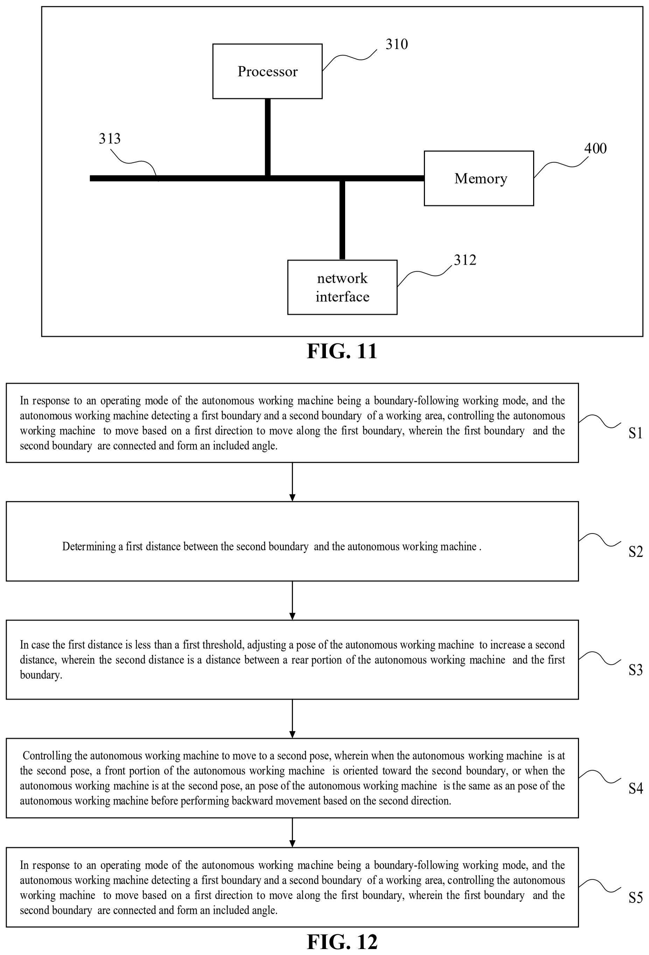

As shown in Figure 12, in some embodiments, a control method for an autonomous working machine is provided, and the method is applied to the autonomous working machine. The control method comprises:

Step S1: In response to an operating mode of the autonomous working machine 900 being a boundary-following working mode and the autonomous working machine 900 detecting a first boundary n1 and a second boundary n2 of a working area L, controlling the autonomous working machine 900 to move based on a first direction to move along the first boundary n1, wherein the first boundary n1 and the second boundary n2 are connected and form an included angle.

In some embodiments, when the autonomous working machine 900 is in the boundary-following working mode, the autonomous working machine 900 maintains a certain relative positional relationship with the boundary (for example, satisfying a preset relative positional relationship with a lateral boundary), and processes or maintains a surface of the working area L on and/or near the boundary.

In some embodiments, the boundary-following working mode refers to the autonomous working machine 900 moving and working inside the boundary, or the autonomous working machine 900 moving and working with at least a part of the body 100 exceeding the boundary.

In some embodiments of the present application, when the autonomous working machine 900 is in the boundary-following working mode, if a corner is detected, i.e., the machine detects connected first boundary n1 and second boundary n2 (detecting that the first boundary n1 appears on a side of the machine and the second boundary n2 appears in front of the machine), and an included angle between the first boundary n1 and the second boundary n2 is less than an angle threshold (for example, 125 degrees), then the autonomous working machine 900 executes an inner corner control strategy to process or maintain the surface at the inner corner. The angle threshold may be adjusted according to actual needs.

In the inner corner control strategy, first continue to control the machine to move along the boundary located on a side of the machine's current position (the first boundary n1). Illustratively, plan a first direction based on the first boundary n1, and control the machine to move along the first direction to move along the first boundary n1.

Step S2: Determine a first distance between the second boundary n2 and the autonomous working machine 900.

The autonomous working machine 900 is provided with sensors, and the machine detects the first distance between the second boundary n2 and the autonomous working machine 900 based on the sensors. The sensors include contact sensors and/or non-contact sensors. Illustratively, the sensors include one or more of a camera, an ultrasonic ranging sensor, and a satellite positioning sensor.

Step S3: In a case that the first distance is less than a first threshold, adjust a pose of the autonomous working machine 900 to increase a second distance, wherein the second distance is a distance between a rear portion of the autonomous working machine 900 and the first boundary n1.

The autonomous working machine 900 moves and works along the first boundary n1 until the first distance of the autonomous working machine 900 is less than the first threshold. Thus, the autonomous working machine 900 may move to a position very close to the boundary in front (the second boundary n2), thereby working on corners of the inner corner. Taking a lawn mower as an example, grass at the inner corner may be cut to avoid leaving grass and improve cutting coverage.

When the first distance is less than the first threshold, the autonomous working machine 900 adjusts its pose by changing the moving direction, thereby increasing a distance between its rear portion and the first boundary n1.

The autonomous working machine 900 may detect a first distance between the body 100 and the second boundary n2 based on sensor information, and when the first distance is less than a first threshold, may control the autonomous working machine 900 to stop moving forward. The first threshold may be set according to actual requirements. The first threshold may be a static parameter set at factory, or a static parameter adjusted by a user, or a dynamic parameter automatically adjusted by the machine. Illustratively, the sensor information may be image information, positioning information, radar information, etc. Illustratively, the first threshold is 0.2 meters.

Step S5: Control the autonomous working machine 900 to move along the second boundary n2.

Control the autonomous working machine 900 to turn toward a direction where the second boundary n2 is located and move along the second boundary n2. When turning, it may turn in place or turn during the moving process. Since in step S3, the autonomous working machine 900 increased a distance between its rear portion and the first boundary n1, providing larger turning space for step S5, it is therefore possible to avoid the machine going out of bounds or colliding when turning in step S5, improving the operational safety of the machine.

In some embodiments, a working part of the autonomous working machine 900 is located on a right side of the autonomous machine. Taking a lawn mower as an example, a cutting disc of the lawn mower is located on a right side of the lawn mower. To cut the boundary cleanly, the lawn mower executes the boundary-following working mode along the boundary in a counterclockwise direction, thereby keeping the boundary always on the right side of the lawn mower, which is beneficial for the cutting disc to cut grass at the boundary.

In some embodiments, a working part of the autonomous working machine 900 is located on a left side of the autonomous machine. Taking a lawn mower as an example, a cutting disc of the lawn mower is located on a left side of the lawn mower. To cut the boundary cleanly, the lawn mower executes the boundary-following working mode along the boundary in a clockwise direction, thereby keeping the boundary always on the left side of the lawn mower, which is beneficial for the cutting disc to cut grass at the boundary.

In a case that the autonomous working machine 900 moves along the boundary counterclockwise, the first boundary n1 is located on a right side of the autonomous working machine 900. In a case that the autonomous working machine 900 moves along the boundary clockwise, the first boundary n1 is located on a left side of the autonomous working machine 900.

The second boundary n2 may be located directly in front of the autonomous working machine 900, or may be located at the left front or right front.

In some embodiments, the autonomous working machine 900 is provided with a camera, and the camera is installed at a front portion of the machine and configured to capture images.

Images captured by the autonomous working machine 900 may recognize inner corners of the working area L, and angles of the inner corners may be obtained according to related algorithms. When inner corner angles satisfy a predetermined angle range (for example, less than or equal to 125 degrees), it is determined whether a front corner is one that needs to execute the inner corner control strategy according to a distance of the autonomous working machine 900 from the front corner.

As shown in Figure 4, the autonomous working machine 900 may generate a local map based on multiple images, and acquire discrete points P1, P2, P3, P4, P5, P6 that satisfy a predetermined distance relationship with the boundary based on the local map. Connecting these discrete points in sequence forms a path of the autonomous working machine 900 (shown by dashed lines). In the process of recognizing inner corners, every 3 points may first be taken as a group to judge the situation of included angles formed by the connecting lines of the 3 points. When it is found that the connecting lines of one group of three points satisfy a predetermined angle range (for example, less than or equal to 125 degrees), 5 points are selected as a group to judge the situation of included angles formed by the connecting lines again. Illustratively, when points P1, P2, P3 are one group, the three are in a straight line, which is not a corner position. When points P2, P3, P4 are one group, the connecting line of P2 and P3 and the connecting line of P3 and P4 form 90 degrees, which satisfies the angle range. However, at this time, points P1, P2, P3, P4, P5 need to be taken as one group, and the angle formed by the connecting line of P1 and P3 and the connecting line of P3 and P5 needs to be judged continuously. Since it is 90 degrees at this time, it still satisfies the angle range, thereby confirming that point P3 is a corner point configured to indicate an inner corner position of the working area L. After confirming the corner point, it is possible to continue judging whether a distance of the autonomous working machine 900 from the corner point P3 is less than the first threshold. If the judgment result is yes, then the pose of the autonomous working machine 900 is adjusted to increase the second distance.

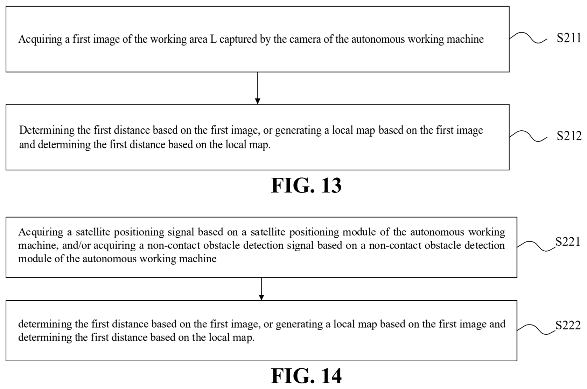

As shown in Figure 13, in some embodiments, step S2 comprises:
Step S211: Acquire a first image of the working area L captured by a camera of the autonomous working machine 900;
Step S212: Determine the first distance according to the first image, or generate a local map according to the first image and determine the first distance according to the local map.

The autonomous working machine 900 performs recognition processing on the first image, determines a relative positional relationship between the boundary and the machine in the first image, and obtains the first distance. The method of determining the first distance based on images is relatively accurate.

Alternatively, the autonomous working machine 900 performs steps such as image recognition and coordinate transformation on the first image and multiple historical images, and fuses them to obtain a local map. The local map characterizes an environment within a certain range around the autonomous working machine 900. The information of the local map is richer, and a more accurate first distance may be obtained.

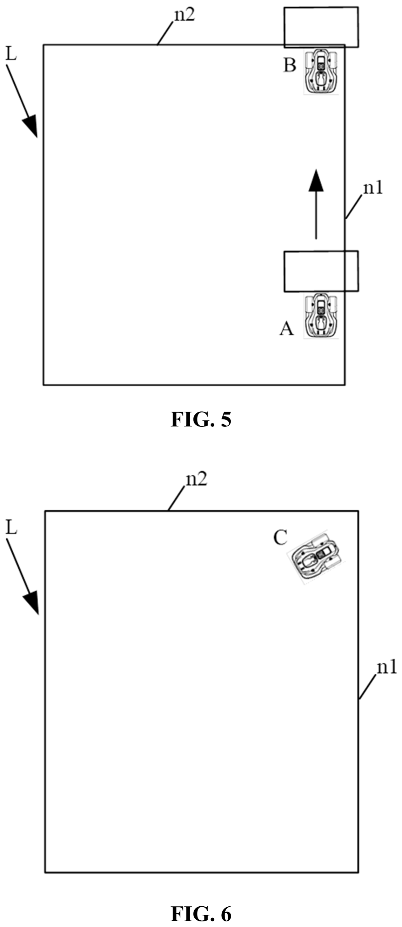

As shown in Figure 5, in some embodiments, the autonomous working machine 900 is a front-wheel-drive machine, a camera (not shown in the figure) is provided at a front portion of the autonomous working machine 900, and the autonomous working machine 900 performs counterclockwise boundary-following movement. The autonomous working machine 900 may move and/or work along boundaries of the working area L. The boundaries include a first boundary n1 and a second boundary n2, and an inner corner is formed between the first boundary n1 and the second boundary n2. An angle of the inner corner is approximately 90°. At pose A, images may capture the first boundary n1, the first boundary n1 is located on a right side of the machine, and the autonomous working machine 900 may process the images and determine a first direction to move forward along the first boundary n1. During the forward movement, the autonomous working machine 900 gradually approaches the second boundary n2, and the camera may gradually capture the second boundary n2. In this embodiment, a first distance between the second boundary n2 and the autonomous working machine 900 may be judged based on images. If the first distance is large, the machine continues to move along the first boundary n1. If the first distance is less than a first threshold, the machine may adjust its pose to make a rear portion of the autonomous working machine 900 move away from the first boundary n1, increasing a distance between the rear portion of the autonomous working machine 900 and the first boundary n1, thereby creating space for subsequent turning movement and avoiding the machine going out of bounds or colliding with the first boundary n1. In this embodiment, only when the first distance is less than the first threshold is the pose of the autonomous working machine 900 controlled, which may cut grass near corners cleanly and improve cutting coverage.

In some embodiments, the autonomous working machine 900 is provided with a satellite positioning module and/or a non-contact obstacle detection module. The satellite positioning module includes, for example, a GPS module (Global Positioning System) or an RTK module (Real-time kinematic). The non-contact obstacle detection module includes, for example, ultrasonic sensors, radar sensors, etc. As shown in Figure 14, step S2 comprises:
Step S221: Acquire a satellite positioning signal based on a satellite positioning module of the autonomous working machine 900, and/or acquire a non-contact obstacle detection signal based on a non-contact obstacle detection module of the autonomous working machine 900;
Step S222: Determine the first distance according to the satellite positioning signal and/or the non-contact obstacle detection signal.

In some embodiments, the autonomous working machine 900 pre-stores a global map of the working area L. According to the map and the satellite positioning signal, it may be judged whether the machine is currently located at a corner and the first distance between the machine and the second boundary n2.

In some embodiments, fences, railings, or walls are provided at the boundaries, and the autonomous working machine 900 may detect the fences, railings, or walls based on the non-contact obstacle detection module, thereby determining the first distance.

In some embodiments, adjusting the pose of the autonomous working machine 900 to increase the second distance in step S3 comprises:
controlling the autonomous working machine 900 to perform backward movement based on a second direction to a first pose C, wherein when the autonomous working machine 900 is at the first pose C, the second distance is greater than a second threshold, the second direction has an included angle with a reverse direction of the first direction, and the second direction is a direction away from the first boundary n1.

Adjusting the pose of the autonomous working machine 900 includes controlling position and/or pose. As shown in Figures 5 and 6, when at pose B, the autonomous working machine 900 may start to adjust its pose and may move backward based on the second direction. The second direction has an included angle with a reverse direction of the first direction, the included angle may be an acute angle, and the second direction may be a direction away from the first boundary n1. Illustratively, a left drive wheel of the autonomous working machine 900 may be controlled to remain stationary, and a right drive wheel may be controlled to rotate backward, thereby controlling the autonomous working machine 900 to move backward with an arc-shaped trajectory to the first pose C, making a distance between a rear portion of the autonomous working machine 900 and the first boundary n1 sufficient to provide adequate space for subsequent turning and avoid the autonomous working machine 900 going out of bounds or colliding. Since the autonomous working machine 900 in Figures 3 and 4 performs counterclockwise boundary-following movement, the autonomous working machine 900 starts from pose B and performs arc movement toward the left rear direction, moving to the first pose C. In a case of clockwise boundary- following movement, specific movement directions may be adjusted according to actual situations.

In this embodiment, a specific angle and movement distance of the second direction may be determined based on real-time images, or a specific angle and movement distance of the second direction may be determined based on preset angles.

In some embodiments, a backward trajectory based on the second direction is arc-shaped, making the operating trajectory of the autonomous working machine 900 more smooth and aesthetically pleasing.

In some embodiments, a backward trajectory based on the second direction includes multiple sub-trajectories, that is, the autonomous working machine 900 completes step S3 through multiple small-distance backward movements.

In some embodiments, after reaching pose B, it may first move backward along the first boundary n1, then move forward toward the left front direction, thereby completing step S3.

In some embodiments, after reaching pose B, the autonomous working machine 900 is controlled to move in a direction away from the first boundary n1 and the second boundary n2 until a movement duration is greater than a time threshold or until a movement distance is greater than a distance threshold, thereby completing step S3.

In some embodiments, after step S3 and before step S5, the method further comprises:
Step S4: Control the autonomous working machine 900 to move to a second pose, wherein when the autonomous working machine 900 is at the second pose, a front portion of the autonomous working machine 900 is oriented toward the second boundary n2, or when the autonomous working machine 900 is at the second pose, a pose of the autonomous working machine 900 is the same as a pose of the autonomous working machine 900 before performing backward movement based on the second direction.

In step S4, the autonomous working machine 900 adjusts its pose for the purpose of straightening the body 100, making a front portion of the body 100 oriented toward the second boundary n2, with the body 100 basically perpendicular to the second boundary n2, or straightening the body 100 to make a pose of the machine the same as a pose before performing backward movement based on the second direction, ensuring that a subsequent forward direction of the machine is basically parallel to the direction in step S1, which is beneficial for working on the inner corner in step S5.

In some embodiments, controlling the autonomous working machine 900 to move to the second pose in step S4 comprises:
controlling the autonomous working machine 900 to perform in-place rotation based on a third direction, wherein the third direction is a direction away from the first boundary n1.

In step S4, a method for the autonomous working machine 900 to adjust its pose may be to perform in-place rotation, swinging a front portion of the machine in a direction away from the first boundary n1. In front-wheel-drive machines, the body 100 may be straightened by controlling front drive wheels of the machine to rotate.

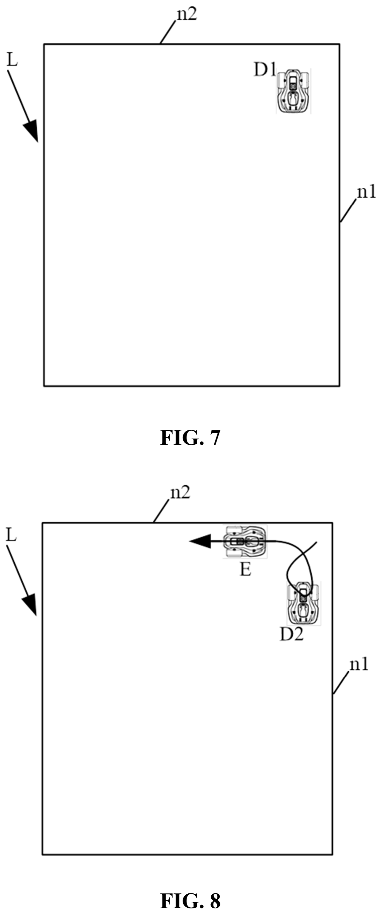

As shown in Figure 7, when at the first pose C, the autonomous working machine 900 may perform in-place rotation to the second pose D1, thereby orienting a front portion of the machine toward the second boundary n2. A rear portion of the machine gradually approaches the first boundary n1 during this process, but will not go out of bounds or collide with the first boundary n1, and the rear portion of the machine still maintains a certain distance from the first boundary n1.

If the autonomous working machine 900 performs counterclockwise boundary-following movement, then the autonomous working machine 900 needs to start from the first pose C and perform in-place rotation toward the left front direction, rotating to the second pose D1.

In this embodiment, a specific angle and movement distance of the third direction may be determined based on real-time images, or a specific angle and movement distance of the third direction may be determined based on preset angles.

In some embodiments, controlling the autonomous working machine 900 to move to the second pose in step S4 comprises:
controlling the autonomous working machine 900 to perform backward movement based on a fourth direction to the second pose D2, wherein the fourth direction has an included angle with a reverse direction of the first direction, and the fourth direction is a direction to approach the first boundary n1.

In step S4, a method for the autonomous working machine 900 to adjust its pose may also be to straighten during the backward movement process. In front-wheel-drive machines, the body 100 may be straightened by controlling front drive wheels of the machine to move backward and fine-tuning the direction during the backward movement process.

As shown in Figure 8, when at the first pose C, the autonomous working machine 900 may move backward based on the fourth direction, thereby fine-tuning the direction during the backward movement process to control the autonomous working machine 900 to move to the second pose D2. A rear portion of the machine gradually approaches the first boundary n1 during this process, but will not go out of bounds or collide with the first boundary n1, and the rear portion of the machine still maintains a certain distance from the first boundary n1.

Illustratively, a trajectory of backward movement based on the fourth direction may be arc-shaped, and arc-shaped backward movement based on the fourth direction may be achieved by controlling two drive wheels to perform differential rotation.

As shown in Figures 6 and 8, under the premise that the autonomous working machine 900 performs counterclockwise boundary-following movement, the autonomous working machine 900 starts from the first pose C and performs arc-shaped backward movement toward the right rear direction, moving to the second pose D2. The trajectory is aesthetically pleasing and smooth. Starting from pose B, a movement trajectory of the autonomous working machine 900 is shown in Figure 8.

In this embodiment, a specific angle and movement distance of the fourth direction may be determined based on inertial navigation data, or a specific angle and movement distance of the fourth direction may be determined based on preset angles.

In some embodiments, when the autonomous working machine 900 is at the second pose D2, a distance between the autonomous working machine 900 and the first boundary n1 is less than the second distance.

Compared to after executing step S3, a distance between the autonomous working machine 900 and the first boundary n1 after executing step S4 is smaller. When the machine executes step S5 in this pose, the machine can be closer to the inner corner in step S5, improving working coverage at the inner corner.

Throughout the entire process, at least one wheel of the autonomous working machine is rotating, making the movement trajectory of the machine more aesthetically pleasing and smooth.

In some embodiments, the autonomous working machine 900 is provided with a camera, and the camera is configured to capture images of the working area L.

Step S5 comprises:
acquiring a second image captured by a camera of the autonomous working machine 900;
determining a boundary-following movement path corresponding to the second boundary n2 according to the second image;
based on the boundary-following movement path, controlling the autonomous working machine 900 to turn in a direction away from the first boundary n1 and move along the second boundary n2.

In this embodiment, after the autonomous working machine 900 rotates to the second pose, a next movement direction and movement angle may be determined according to real-time images, thereby moving toward the second boundary n2 to make the second boundary n2 located on its right side (such as pose E). The autonomous working machine 900 may continue to move and/or work along the second boundary n2.

In some embodiments, determining the boundary-following movement path corresponding to the second boundary n2 according to the second image comprises:
determining a local map according to the second image;
determining the boundary-following movement path corresponding to the second boundary n2 according to the local map.

In this embodiment, a local map may be established according to real-time images and/or historical images. Illustratively, a local map may be established according to all or part of images captured during the period from pose B to the second pose D1 or D2, ensuring precise map information. Path planning may be performed based on the precise local map to determine movement directions and angles, obtaining more precise boundary-following movement paths and avoiding going out of bounds or colliding during the movement process.

The machine may recognize lawns, boundaries, and obstacles according to images, and mark lawns, boundaries, and obstacles in the local map. Movement paths are planned according to position information of lawns, boundaries, and obstacles in the local map to avoid collision between a rear portion of the machine and obstacles during the turning process.

In some embodiments, after step S5, the control method further comprises:
when a distance that the autonomous working machine 900 moves along the second boundary n2 is greater than a third threshold, controlling the autonomous working machine 900 to move backward;
when a distance between the autonomous working machine 900 and the first boundary n1 is less than a fourth threshold, controlling the autonomous working machine 900 to move forward along the second boundary n2.

Taking a lawn mower as an example, after the lawn mower cuts the inner corner, it moves along the second boundary n2. To further ensure that grass near the inner corner is cut cleanly, it may move backward and cut after moving a certain distance along the second boundary n2, thereby performing supplementary cutting on grass near the inner corner, and then move forward and cut along the second boundary n2.

In some embodiments, the boundary-following working mode is an inner boundary working mode or a cross-boundary working mode. In the inner boundary working mode, the autonomous working machine 900 performs boundary-following movement within the working area L and executes vegetation maintenance. In the cross-boundary working mode, the autonomous working machine 900 performs boundary-following movement with at least a part of structure located outside the working area L and executes vegetation maintenance.

In the inner boundary working mode, when the autonomous working machine 900 moves along the boundary and works, the body 100 is always located within the working area L and will not exceed the boundary.

In the cross-boundary working mode, when the autonomous working machine 900 moves along the boundary and works, at least a part of the body 100 may exceed the boundary when the boundary is safe. Boundary safety means that there are no objects such as walls or ditches around the boundary that may easily cause machine damage.

In the inner boundary working mode, an actual position of the boundary may be determined based on images, and the autonomous working machine 900 may be controlled according to the actual position of the boundary, thereby achieving inner boundary movement. In the cross-boundary working mode, after determining the actual position of the boundary based on images, outward expansion processing is performed based on the actual position of the boundary toward the outside of the working area L, thereby obtaining an expanded boundary position, and the autonomous working machine 900 is controlled according to the expanded boundary position, thereby achieving cross-boundary movement.

In the cross-boundary working mode and inner boundary working mode, the inner corner control strategy executed by the machine is the same. The difference is only that in the inner boundary working mode, the autonomous working machine 900 is controlled based on the actual position of the boundary, while in the cross-boundary working mode, the autonomous working machine 900 is controlled based on the expanded boundary position.

In some embodiments, after adjusting the pose of the autonomous working machine 900 to increase the second distance and before controlling the autonomous working machine 900 to move along the second boundary n2, the control method comprises:
controlling the autonomous working machine to perform in-place rotation based on a third direction, wherein the third direction is a direction away from the first boundary;
controlling the autonomous working machine 900 to move toward the second boundary n2;
when a distance between the autonomous working machine 900 and the second boundary n2 is less than a sixth threshold, controlling the autonomous working machine 900 to move backward;
when a distance between the autonomous working machine 900 and the second boundary n2 is greater than a seventh threshold, controlling the autonomous working machine 900 to turn in a direction away from the first boundary n1 and move along the second boundary n2.

Controlling the autonomous working machine 900 to move toward the second boundary n2, wherein a movement path has a certain distance from a movement path in step S1, and directions where the two are located may be parallel or may form a certain included angle. Working while moving toward the second boundary n2 may continue cutting grass near the inner corner and avoid missed cutting.

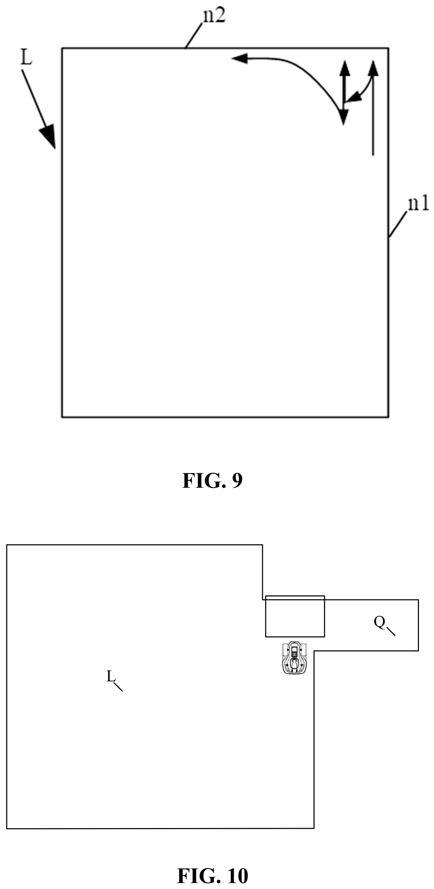

As shown in Figure 9, a movement trajectory of the autonomous working machine 900 starting from pose A is shown in Figure 9. First, it moves forward toward the second boundary n2 and cuts, then moves backward toward the left rear direction, rotates to straighten the body 100, moves forward, moves backward (to avoid going out of bounds or colliding during subsequent turning), and turns and moves to move along the second boundary n2. By moving forward toward the second boundary n2 multiple times, grass at the corner may be cut cleanly and missed cutting may be avoided.

In some embodiments, for convenient and fast passage through inner corners, after executing step S1 and step S2, when the first distance is less than the first threshold, the autonomous working machine 900 may be controlled to move backward, and after moving backward a certain distance, the autonomous working machine 900 may be controlled to turn and move along the second boundary n2. This path is beneficial for improving working efficiency of the autonomous working machine 900.

In some embodiments, the control method further comprises: in response to the operating mode being a boundary-following movement mode and the autonomous working machine 900 detecting the first boundary n1 and the second boundary n2, controlling the autonomous working machine 900 to move along the first boundary n1 until a distance between the autonomous working machine 900 and the second boundary n2 is less than a fifth threshold, wherein the fifth threshold is greater than the first threshold, and the boundary-following movement mode is that the autonomous working machine 900 performs boundary-following movement within the working area L;
controlling the autonomous working machine 900 to turn in a direction away from the first boundary n1 and move along the second boundary n2.

In the boundary-following movement mode, the autonomous working machine 900 may move along the boundary but not work. In this mode, it is not necessary to consider the problem of working coverage. Therefore, if the machine encounters an outer corner, it may turn at a position slightly farther from the first boundary n1, ensuring that it will not exceed the boundary or collide, and improving the safety of the machine. The boundary-following movement mode may occur in scenarios of searching for charging stations or cross-area transfer points.

In each of the above embodiments, each threshold may be designed according to actual requirements.

In each of the above embodiments, the control method may be executed by a controller of the autonomous working machine 900. The controller may be provided in the autonomous working machine 900, or may be provided on a cloud server or a mobile electronic device at a user end.

In some embodiments, since the autonomous working machine 900 is relatively close to the edge when working at inner corners, it is easy to exceed the boundary or collide with obstacles near the boundary when turning or moving backward. Therefore, output torque and/or drive current of drive components may be monitored during the movement process to make timely reaction actions when the autonomous working machine 900 collides, thereby reducing the probability of danger occurrence and also being beneficial for extending the service life of the autonomous working machine 900.

As shown in Figure 10, the working area L in the figure is provided with a narrow area Q. In some venues, boundaries near outer corners may be formed by walls. When a self-moving robot moves along lateral boundaries and moves to the narrow area Q, the lateral boundaries will suddenly disappear in images collected by the robot, and there are front boundaries in the images. This is because walls of the outer corner block the machine's line of sight, preventing the machine from seeing boundaries within the narrow area Q. If movement is controlled according to front boundaries at this time, the self-moving robot will move toward the front boundaries, resulting in inability to move to the narrow area Q and inability to cut the narrow area Q, leading to missed grass.

To solve the technical problem of inability to cut the narrow area Q, in some embodiments, a control method for an autonomous working machine 900 is provided. The autonomous working machine 900 is configured to at least move and/or work along boundaries of the working area L. The control method comprises:
acquiring images of the working area L;
detecting boundaries of the working area L based on the images and determining detection results;
in a case that the detection results indicate detection of disappearance or interruption of lateral boundaries, controlling the autonomous working machine 900 to continue moving a certain distance along a current movement path and then turn toward a direction where the lateral boundaries before disappearance or interruption were located, wherein the current movement path is a movement path of the autonomous working machine 900 before the lateral boundaries disappeared or were interrupted, and the lateral boundaries are boundaries of the working area L located on sides of the autonomous working machine 900.

In some embodiments, after the autonomous working machine 900 continues moving a certain distance along the current movement path and then turns toward the direction where the lateral boundaries before disappearance or interruption were located, the method comprises: after the autonomous working machine 900 moves a first preset distance along the current movement path, turning toward the direction where the lateral boundaries before disappearance or interruption were located.

In some embodiments, the control method further comprises: after the autonomous working machine 900 turns toward the direction where the lateral boundaries before disappearance or interruption were located, re-detecting the lateral boundaries and controlling the autonomous working machine 900 to move and/or work along the re-detected lateral boundaries.

As shown in Figure 10, when the autonomous working machine 900 detects disappearance or interruption of lateral boundaries, it turns right 90 degrees and detects boundaries according to real-time images, moving according to boundaries of the narrow area Q.

In some embodiments, the autonomous working machine 900 turning toward the direction where the lateral boundaries before disappearance or interruption were located comprises: the autonomous working machine 900 performing in-place turning or turning while moving, wherein in-place turning means that a rotation center of the autonomous working machine 900 does not change when turning.

In some embodiments, in-place turning of the autonomous working machine 900 comprises: wheels of the autonomous working machine 900 close to the lateral boundaries rotating backward, and wheels far from the lateral boundaries rotating forward.

Throughout the entire outer corner movement process, wheels of the autonomous working machine 900 rotate continuously, with smooth and aesthetically pleasing actions.

In some embodiments, the control method further comprises: in a case that the detection results indicate detection of lateral boundaries, determining a lateral boundary angle of the lateral boundaries based on the images, and determining a boundary-following turning direction and a boundary-following turning angle according to the lateral boundary angle; controlling the autonomous working machine 900 to move and/or work according to the boundary-following turning direction and the boundary-following turning angle.

Based on the same inventive concept as the foregoing embodiments, embodiments of the present invention provide an autonomous working machine. As shown in Figure 11, the autonomous working machine comprises: a processor 310 and a memory 400 storing a computer program. The processor 310 illustrated in Figure 11 is not used to indicate that the number of processors 310 is one, but is only used to indicate a positional relationship of the processor 310 relative to other devices. In actual applications, the number of processors 310 may be one or more. Similarly, the memory 400 illustrated in Figure 11 has the same meaning, i.e., it is only used to indicate a positional relationship of the memory 400 relative to other devices. In actual applications, the number of memories 400 may be one or more. When the processor 310 runs the computer program, the control method of the above embodiments is implemented.

The autonomous working machine may further comprise: at least one network interface 312. Various components in the autonomous working machine are coupled together through a bus system 313. It can be understood that the bus system 313 is configured to implement connection communication between these components. In addition to including a data bus, the bus system 313 further includes a power bus, a control bus, and a status signal bus. However, for the sake of clear illustration, various buses are all labeled as bus system 313 in Figure 9.

The memory 400 may be volatile memory or non-volatile memory, or may include both volatile and non-volatile memory. The non-volatile memory may be Read Only Memory (ROM), Programmable Read-Only Memory (PROM), Erasable Programmable Read-Only Memory (EPROM), Electrically Erasable Programmable Read-Only Memory (EEPROM), ferromagnetic random access memory (FRAM), Flash Memory, magnetic surface memory, optical disc, or Compact Disc Read-Only Memory (CD-ROM). The magnetic surface memory may be magnetic disk memory or magnetic tape memory. The volatile memory may be Random Access Memory (RAM), which is used as external cache. By way of illustrative but not restrictive description, many forms of RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), SyncLink Dynamic Random Access Memory (SLDRAM), and Direct Rambus Random Access Memory (DR RAM). The memory 400 described in embodiments of the present invention is intended to include, but not be limited to, these and any other suitable types of memory.

The memory 400 in embodiments of the present invention is configured to store various types of data to support operations of the autonomous working machine. Examples of such data include: any computer programs configured to operate on the autonomous working machine, such as operating systems and application programs; contact data; phonebook data; messages; pictures; videos, etc. The operating system includes various system programs, such as framework layers, core library layers, driver layers, etc., configured to implement various basic services and process hardware-based tasks. Application programs may include various application programs, such as Media Player, Browser, etc., configured to implement various application services. Here, programs that implement methods of embodiments of the present invention may be included in the application programs.

Based on the same inventive concept as the foregoing embodiments, this embodiment further provides a computer storage medium in which a computer program is stored. The computer storage medium may be ferromagnetic random access memory (FRAM), Read Only Memory (ROM), Programmable Read-Only Memory (PROM), Erasable Programmable Read-Only Memory (EPROM), Electrically Erasable Programmable Read-Only Memory (EEPROM), Flash Memory, magnetic surface memory, optical disc, or Compact Disc Read-Only Memory (CD-ROM), etc.; it may also be various devices including one or any combination of the above memories, such as mobile phones, computers, tablet devices, personal digital assistants, etc. When the computer program stored in the computer storage medium is run by a processor, the control method applied to the above autonomous working machine is implemented. For specific step processes implemented when the computer program is executed by the processor, please refer to the descriptions of the above embodiments, which will not be repeated here.

Various technical features of the above embodiments may be arbitrarily combined. To make the description concise, not all possible combinations of various technical features in the above embodiments have been described. However, as long as there is no contradiction in the combinations of these technical features, they should all be considered as within the scope recorded in this specification.

In this document, the terms "include," "comprise," or any other variants thereof are intended to cover non-exclusive inclusion, which, in addition to including the listed elements, may also include other elements not explicitly listed.

The above are only specific embodiments of the present invention, but the protection scope of the present invention is not limited thereto. Any person skilled in the art who is familiar with this technical field can easily think of changes or substitutions within the technical scope disclosed by the present invention, which should all be covered within the protection scope of the present invention. Therefore, the protection scope of the present invention should be based on the protection scope of the claims.

## Claims

1. A method for controlling an autonomous working machine (900), **characterized in that** the control method comprises:
in response to an operating mode of the autonomous working machine (900) being a boundary-following working mode and the autonomous working machine (900) detecting a first boundary (n1) and a second boundary (n2) of a working area (L), controlling the autonomous working machine (900) to move based on a first direction to move along the first boundary (n1), wherein the first boundary (n1) and the second boundary (n2) are connected and form an included angle;
determining a first distance between the second boundary (n2) and the autonomous working machine (900);
in a case that the first distance is less than a first threshold, adjusting a pose of the autonomous working machine (900) to increase a second distance, wherein the second distance is a distance between a rear portion of the autonomous working machine (900) and the first boundary (n1);
controlling the autonomous working machine (900) to move along the second boundary (n2).

2. The method for controlling an autonomous working machine (900) according to claim 1, **characterized in that**:
determining the first distance between the second boundary (n2) and the autonomous working machine (900) comprises:
acquiring a first image of the working area (L) captured by a camera of the autonomous working machine (900);
determining the first distance according to the first image, or generating a local map according to the first image and determining the first distance according to the local map.

3. The method for controlling an autonomous working machine (900) according to claim 1 or 2, **characterized in that**:
determining the first distance between the second boundary (n2) and the autonomous working machine (900) comprises:
acquiring a satellite positioning signal based on a satellite positioning module of the autonomous working machine (900), and/or acquiring a non-contact obstacle detection signal based on a non-contact obstacle detection module of the autonomous working machine (900);
determining the first distance according to the satellite positioning signal and/or the non-contact obstacle detection signal.

4. The method for controlling an autonomous working machine (900) according to any one of claims 1 to 3, **characterized in that** adjusting the pose of the autonomous working machine (900) to increase the second distance comprises:
controlling the autonomous working machine (900) to perform backward movement based on a second direction to a first pose (C), wherein when the autonomous working machine (900) is at the first pose (C), the second distance is greater than a second threshold, the second direction has an included angle with a reverse direction of the first direction, and the second direction is a direction away from the first boundary (n1).

5. The method for controlling an autonomous working machine (900) according to claim 4, **characterized in that** a backward trajectory based on the second direction is arc-shaped.

6. The method for controlling an autonomous working machine (900) according to claim 4 or 5, **characterized in that** after adjusting the pose of the autonomous working machine (900) to increase the second distance and before controlling the autonomous working machine (900) to move along the second boundary (n2), the method further comprises:
controlling the autonomous working machine (900) to move to a second pose (D1, D2), wherein when the autonomous working machine (900) is at the second pose (D1, D2), a front portion of the autonomous working machine (900) is oriented toward the second boundary (n2), or when the autonomous working machine (900) is at the second pose (D1, D2), a pose of the autonomous working machine (900) is the same as a pose of the autonomous working machine (900) before performing backward movement based on the second direction.

7. The method for controlling an autonomous working machine (900) according to claim 6, **characterized in that** controlling the autonomous working machine (900) to move to the second pose (D1, D2) comprises:
controlling the autonomous working machine (900) to perform in-place rotation based on a third direction, wherein the third direction is a direction away from the first boundary (n1).

8. The method for controlling an autonomous working machine (900) according to claim 6, **characterized in that** controlling the autonomous working machine (900) to move to the second pose (D1, D2) comprises:
controlling the autonomous working machine (900) to perform backward movement based on a fourth direction to the second pose (D1, D2), wherein the fourth direction has an included angle with a reverse direction of the first direction, and the fourth direction is a direction to approach the first boundary (n1).

9. The method for controlling an autonomous working machine (900) according to any one of claims 6 to 8, **characterized in that** when the autonomous working machine (900) is at the second pose (D1, D2), a distance between the autonomous working machine (900) and the first boundary (n1) is less than the second distance.

10. The method for controlling an autonomous working machine (900) according to any one of claims 1 to 9, **characterized in that** controlling the autonomous working machine (900) to move along the second boundary (n2) comprises:
acquiring a second image captured by a camera of the autonomous working machine (900);
determining a boundary-following movement path corresponding to the second boundary (n2) according to the second image;
based on the boundary-following movement path, controlling the autonomous working machine (900) to turn in a direction away from the first boundary (n1) and move along the second boundary (n2).

11. The method for controlling an autonomous working machine (900) according to claim 10, **characterized in that** determining the boundary-following movement path corresponding to the second boundary (n2) according to the second image comprises:
determining a local map according to the second image;
determining the boundary-following movement path corresponding to the second boundary (n2) according to the local map.

12. The method for controlling an autonomous working machine (900) according to any one of claims 1 to 11, **characterized in that** the control method further comprises:
when a distance that the autonomous working machine (900) moves along the second boundary (n2) is greater than a third threshold, controlling the autonomous working machine (900) to move backward;
when a distance between the autonomous working machine (900) and the first boundary (n1) is less than a fourth threshold, controlling the autonomous working machine (900) to move forward along the second boundary (n2).

13. The method for controlling an autonomous working machine (900) according to any one of claims 1 to 12, **characterized in that** the boundary-following working mode is an inner boundary working mode or a cross-boundary working mode; in the inner boundary working mode, the autonomous working machine (900) performs boundary-following movement within the working area (L) and executes vegetation maintenance; in the cross-boundary working mode, the autonomous working machine (900) performs boundary-following movement with at least a part of structure located outside the working area (L) and executes vegetation maintenance.

14. The method for controlling an autonomous working machine (900) according to any one of claims 1 to 13, **characterized in that** the control method further comprises: in response to the operating mode being a boundary-following movement mode and the autonomous working machine (900) detecting the first boundary (n1) and the second boundary (n2), controlling the autonomous working machine (900) to move along the first boundary (n1) until a distance between the autonomous working machine (900) and the second boundary (n2) is less than a fifth threshold, wherein the fifth threshold is greater than the first threshold, and the boundary-following movement mode is that the autonomous working machine (900) performs boundary-following movement within the working area (L);
controlling the autonomous working machine (900) to turn in a direction away from the first boundary (n1) and move along the second boundary (n2).

15. The method for controlling an autonomous working machine (900) according to any one of claims 1 to 5 and 10 to 14, **characterized in that** after adjusting the pose of the autonomous working machine (900) to increase the second distance and before controlling the autonomous working machine (900) to move along the second boundary (n2), the control method further comprises:
controlling the autonomous working machine (900) to perform in-place rotation based on the third direction, wherein the third direction is a direction away from the first boundary (n1);
controlling the autonomous working machine (900) to move toward the second boundary (n2);
when a distance between the autonomous working machine (900) and the second boundary (n2) is less than a sixth threshold, controlling the autonomous working machine (900) to move backward;
when a distance between the autonomous working machine (900) and the second boundary (n2) is greater than a seventh threshold, controlling the autonomous working machine (900) to turn in a direction away from the first boundary (n1) and move along the second boundary (n2).

16. A computer-readable storage medium, **characterized in that** the storage medium stores a computer program, wherein the computer program is configured to execute the method for controlling an autonomous working machine (900) according to any one of claims 1 to 15.

17. An autonomous working machine (900), **characterized by** comprising:
a processor (310);
a memory (400) configured to store executable instructions of the processor;
wherein the processor (310) is configured to execute the method for controlling an autonomous working machine (900) according to any one of claims 1 to 15.
